# EUROPEAN PATENT APPLICATION

(11) **EP 4 631 759 A1**
(43) Date of publication of application: **15.10.2025**
(21) Application number: 24169492.6
(22) Date of filing: 10.04.2024
(51) Int. Cl.: B60K 15/063, B60K 15/067, B60K 15/07, B60K 15/073

(54) **A SUPERSTRUCTURE FOR CARRYING HYDROGEN FUEL TANK(S) ON A HEAVY-DUTY VEHICLE**

(71) Applicant: VOLVO TRUCK CORPORATION, 405 08 Göteborg (SE)
(72) Inventor: SONDEREGGER, Sigurd, 436 37 Askim (SE); HAGBY, Anton, 414 78 Göteborg (SE)
(74) Representative: Zacco Sweden AB

(57) **Abstract**

A superstructure (200) for carrying hydrogen fuel tank(s) on a heavy-duty vehicle (100) is provided. The superstructure (200) comprise at least one laterally oriented gantry bar (201, 211) that provides a continuous load bearing structure across the superstructure (200), wherein the at least one laterally oriented gantry bar (201, 211) is arranged to extend beyond carried hydrogen fuel tank(s) (120) in the superstructure (200). A vehicle (100) comprising the superstructure (200) and a method for assembling a superstructure (200) on a heavy-duty vehicle (100) are also provided.

## Description

### TECHNICAL FIELD

The disclosure relates generally to a superstructure. In particular aspects, the disclosure relates to a superstructure for carrying hydrogen fuel tank(s) on a heavy-duty vehicle. Although the disclosure may be described with respect to a particular vehicle, the disclosure is not restricted to any particular vehicle.

### BACKGROUND

In vehicles today, in particular heavy-duty vehicles such as semi-trailer vehicles or trucks for cargo transport, hydrogen has the potential to become a preferred fuel. One example of hydrogen powered trucks are trucks employing hydrogen internal combustion engines. Another example of hydrogen powered trucks are so-called Fuel Cell Electric Vehicles (FCEVs). In both cases, the hydrogen may be stored in tanks on-board the truck.

In particular it should be noted that while FCEVs are fully electric, they operate differently from battery electric vehicles (BEVs). Instead of relying solely on batteries, FCEVs use fuel cells to generate electricity onboard. The heart of an FCEV is its fuel cell stack, which converts hydrogen gas into electricity. On a FCEV, when needed, hydrogen flows from the tanks to the fuel cell stack. In the stack, a chemical reaction occurs between hydrogen and oxygen from the ambient air. This reaction produces electricity, which powers the truck's electric motor. Advantageously the only byproduct of this operation is water vapor, which means no harmful emissions is produced.

However, one issue when using hydrogen for a vehicle is the fact that hydrogen gas is highly flammable. There are of course several safety features to mitigate the risks of using hydrogen on a vehicle, such as, e.g. thick-walled hydrogen tanks are designed to withstand pressure and impact, while also being designed to hold the hydrogen at high pressure. Additional fail-safes may include hydrogen dispersement and accumulation prevention. For example, if a fuel cell is damaged or overheats, the system may ensure a safe hydrogen release and that the hydrogen is rapidly dissipated if accidentally released into the air. Ongoing research into increasing the safety of using hydrogen tanks on a vehicle are focused on improving tank materials, safety valves, and leak detection systems.

Another issue when using hydrogen for a vehicle is that the hydrogen tank stack, and sometimes the hydrogen system connected thereto, is large and heavy assembly that requires an assembly framework or superstructure for enabling a secure mounting and fastening of the hydrogen tanks onto the vehicle. Assembling such an assembly framework or superstructure while carrying the hydrogen tanks and system connected thereto may require the large and heavy assembly framework or superstructure to be hoisted several meters up into the air and then carefully and with high precision be lowered down onto its intended position on the vehicle frame. Many established techniques for achieving this require the possibility of releasing the lifting device manually and at an elevated height. This results in an increased risk of causing physical injuries to personnel on the assembly line.

Hence, there is a need for an easy assembly of hydrogen fuel tank(s) onto a vehicle which also improves the safety of the vehicle and said assembly.

### SUMMARY

According to a first aspect of embodiments herein, the object is achieved by a superstructure for carrying hydrogen fuel tank(s) on a heavy-duty vehicle. The superstructure comprise at least one laterally oriented gantry bar providing a continuous load bearing structure across the superstructure. The at least one laterally oriented gantry bar is are arranged to extend beyond carried hydrogen fuel tank(s) in the superstructure.

The first aspect of the disclosure may seek to provide a superstructure for carrying hydrogen fuel tank(s) facilitates an easy assembly onto a heavy-duty vehicle and improves the safety of a heavy-duty vehicle carrying hydrogen fuel tank(s). A technical benefit may include that a large and heavy superstructure carrying hydrogen fuel tank(s) is enabled to be easily be lifted via the at least one laterally oriented gantry bar providing a continuous load bearing structure across the superstructure and assembled onto the heavy-duty vehicle. By also having the at least one laterally oriented gantry bar extending beyond the carried hydrogen fuel tank(s) in superstructure, it is ensured that the rigid structure of the at least one laterally oriented gantry bar will absorb much of the lateral forces that will act upon the carried hydrogen fuel tank(s) in case of a rollover accident. This will reduce the risk of damage to the hydrogen fuel tank(s).

Optionally in some examples, including in at least one preferred example, the at least one laterally oriented gantry bar is positioned above the center of gravity of the superstructure when the superstructure carries hydrogen fuel tank(s) and/or other components. Here, a technical benefit may include that the superstructure when the superstructure carries hydrogen fuel tank(s) and/or other vehicle components may be more easily picked up and lifted from a horizontal position to a vertical position. A further technical benefit may include that, based how the placement of the at least one laterally oriented gantry bar is adjusted in the superstructure, a preferred drop angle when assembling the superstructure carrying hydrogen fuel tank(s) and/or other vehicle components onto the heavy-duty vehicle may be achieved.

Optionally in some examples, including in at least one preferred example, the superstructure comprise at least one guidable support at the bottom of the superstructure engageable with at least one corresponding guidable support arranged on the heavy-duty vehicle. Here, a technical benefit may be that it is ensured that an easy placement and alignment of the large and heavy superstructure is achieved.

Optionally in some examples, including in at least one preferred example, the at least one guidable support and its corresponding guidable support are arranged to achieve a form locking attachment with each other as the superstructure is mounted onto the heavy-duty vehicle. Here, a technical benefit may include that the loads on the attachment bolts used to mount and secure the structure onto the heavy-duty vehicle is reduce during driving operations.

Optionally in some examples, including in at least one preferred example, the at least one guidable support is a bracket comprising a protrusion and its corresponding guidable support is a bracket comprising a corresponding recess, or vice versa. Here, a technical benefit include that a simple and effective form locking attachment, e.g. a cup and cone configuration, may be achieved.

Optionally in some examples, including in at least one preferred example, each end of the at least one laterally oriented gantry bar is arranged to engage with a gantry lift. Here, a technical benefit include that the at least one laterally oriented gantry bar allows for an attachments point with one or more gantry tools of a gantry lift or crane, such as, for example, electrically or hydraulically assembly pliers. A further technical benefit may include that by being able to employ a gantry lift or crane in a purposeful manner for lifting and assembling the superstructure onto the heavy-duty vehicle, no actions during the assembly process require any personnel to be operating at an elevated height, thus also adding a higher level of security during the assembly process.

Optionally in some examples, including in at least one preferred example, the at least one laterally oriented gantry bar is at least partly hollow and comprise open ends for allowing assembly pliers of the gantry lift to enter the at least one laterally oriented gantry bar. Here, a technical benefit include that an easy pick-up and lifting of the superstructure by a gantry lift or crane, as well as, a easy release of the superstructure by the gantry lift or crane is achieved.

Optionally in some examples, including in at least one preferred example, the open ends of the at least one laterally oriented gantry bar comprise end-pieces providing additional structural support to the superstructure. Here, a technical benefit include that additional structural strength to the superstructure that will further protect the hydrogen fuel tank(s), the cabin and the driver of the heavy-duty vehicle in case of a rollover accident is provided.

Optionally in some examples, including in at least one preferred example, the superstructure is arranged to carry additional hydrogen fuel tank equipment and/or cooling system components. Here, a technical benefit include that the superstructure further may store additional sensitive equipment that also may be in need of additional protection in case of a rollover accident.

Optionally in some examples, including in at least one preferred example, the at least one laterally oriented gantry bar comprise two or more laterally oriented gantry bars. Here, a technical benefit include that the rigidity and structural strength of the superstructure is further improved compared to using only a single gantry bar. A further technical benefit may include that it allows for the weight of the superstructure to be shared between the gantry bars, thereby reducing the required load on each of the gantry bars when lifting the superstructure. Yet a further technical benefit may include that a more secure and stable lifting of the superstructure is enabled, since the additional attachments points of the at least second laterally oriented gantry bar will allow additional gantry tools of a gantry lift or crane to be used to lift and balance the superstructure.

Optionally in some examples, including in at least one preferred example, the superstructure is arranged to be disposed between a driver cabin and a trailer on the heavy-duty vehicle. Here, a technical benefit include that, in addition to protecting the carried hydrogen fuel tank(s), it will also protect the driver in the driver cabin of the heavy-duty vehicle from the lateral forces that may act upon the driver cabin in case of a rollover accident.

Optionally in some examples, including in at least one preferred example, the superstructure is further arranged to be fitted with air deflector plates on each side of the superstructure towards which the ends of the at least one laterally oriented gantry bar are directed. Here, a technical benefit include that, while providing a more aero-dynamic form to the heavy-duty vehicle and the superstructure when the superstructure is assembled behind the cabin of the heavy-duty vehicle, the air-deflector plates may also provide additional structural strength to the superstructure that will further protect the hydrogen fuel tank(s), the cabin and the driver of the heavy-duty vehicle in case of a rollover accident.

Optionally in some examples, including in at least one preferred example, the superstructure is further arranged to be securely fastened to the vehicle using nuts and bolts. Here, since the guidable supports will continuously be form locked together after assembly, a technical benefit include that conventional shear forces acting on the nuts and bolts holding the superstructure to the heavy-duty vehicle frame will be reduced. This may reduce the need for the number of nuts and bolts needed to securely fasten the superstructure to the heavy-duty vehicle, thus reducing the time and cost of the assembly.

According to a second aspect of embodiments herein, the object is achieved by a vehicle comprising a superstructure as described above. Optionally in some examples, including in at least one preferred example, the vehicle is a vehicle employing hydrogen internal combustion engine or a Fuel Cell Electric Vehicle, FCEV.

According to a third aspect of embodiments herein, the object is achieved by a method for assembling a superstructure as described above on a heavy-duty vehicle 100. The method comprises lifting the superstructure via the at least one laterally oriented gantry bar. The method also comprises positioning the superstructure on the vehicle by engaging at least one guidable support at the bottom of the superstructure with at least one corresponding guidable support arranged on the heavy-duty vehicle. Further, the method comprises, once the at least one guidable support is form locked with the at least one corresponding guidable support, assembling the superstructure on the heavy-duty vehicle.

Optionally in some examples, including in at least one preferred example, the assembling may comprise securely fastening the superstructure to the vehicle using nuts and bolts.

The above aspects, accompanying claims, and/or embodiments disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Features and advantages of the embodiments will become readily apparent to those skilled in the art by the following detailed description of exemplary embodiments thereof with reference to the accompanying drawings, wherein:
**FIG. 1** is a side view of a vehicle able to carry hydrogen tank(s) behind the cabin of the vehicle.
**FIG. 2-3** are schematic illustrations of a superstructure according to some embodiments.
**FIGS. 4A-4C** are exemplary illustrations of a superstructure according to some embodiments.
**FIG. 5A-5C** are schematic illustrations of a superstructure comprising guidable supports according to some embodiments.
**FIGS. 6-8** are exemplary illustrations of a guidable supports according to some embodiments.
**FIG. 9A-9E** are a schematic illustration of an operation of a gantry lift and a superstructure according to some embodiments.
**FIG. 10** is a schematic illustration of an rollover accident of a heavy-duty vehicle with a superstructure carrying hydrogen fuel tank(s) according to some embodiments.
**FIG. 11** is a flowchart depicting a method for assembling a superstructure on a heavy-duty vehicle 100.

### DETAILED DESCRIPTION

Aspects set forth below represent the necessary information to enable those skilled in the art to practice the disclosure.

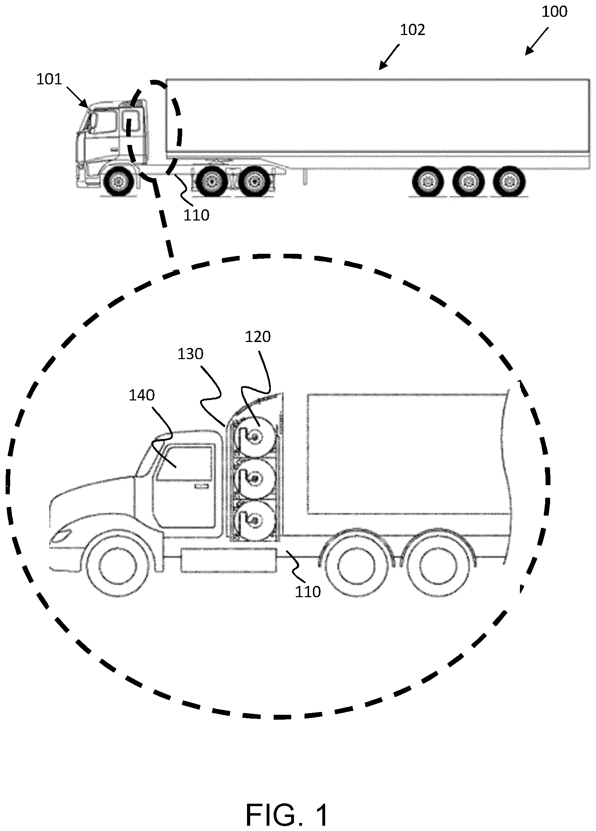

**FIG. 1** illustrates an example of a vehicle 100. In this case, the vehicle 100 is exemplified as a heavy-duty vehicle combination for cargo transport, i.e. a truck/towing vehicle 101 configured to tow a trailer unit 102 in a known manner, e.g. by a fifth wheel connection. It should be noted that with the term heavy-duty vehicle herein is meant a vehicle designed for the handling and transport of heavier objects or large quantities of cargo. The term heavy-duty vehicle may, however, also refer to a vehicle designed for use in construction, mining operations, or similar, such as, a working or construction machine. It should also be noted that even though the embodiments of the superstructure herein are described mainly with respect to a heavy-duty vehicle, such as, the heavy-duty vehicle combination 101, 102 in Fig. 1, the embodiments herein should not be considered restricted to this particular type of vehicle but may also be used in other types of vehicles, such as, passenger cars, commercial vehicles, busses, etc.

One or more hydrogen tank(s) 120, or hydrogen tank stack, may be arranged to be positioned, fitted and attached to a vehicle frame 110 of the heavy-duty vehicle 100 using an assembly framework or superstructure 130. The location of the assembly framework or superstructure 130 carrying the hydrogen tank(s) 120 may, for example, be behind the driver cabin 140 of the heavy-duty vehicle 100.

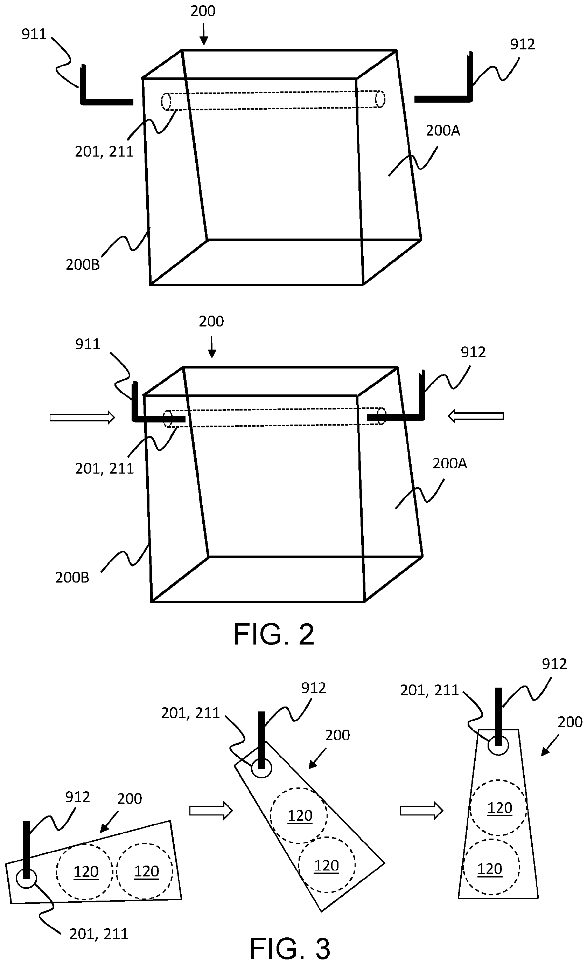

**FIG. 2** illustrates schematic examples of a superstructure 200 according to some embodiments. The term "superstructure" is herein intended to refer to a structure, which also may be referred to as a mounting or carrying system, intended to be assembled on top of another structure, e.g. a vehicle frame 110 of the heavy-duty vehicle 100. Also, the term "gantry" is herein intended to refer to a superstructure located behind a cabin of a vehicle. Further, the term "gantry lift" or "gantry crane" is herein intended to refer to a lift or crane suitable for lifting said gantry or superstructure, and the term "gantry bar" is herein intended to refer to a bar or frame part that may be suitably used for lifting said gantry or superstructure.

The superstructure 200 comprises a laterally oriented gantry bar 201, 211. The gantry bar 201, 211 is laterally oriented in respect of the upright mounting position of the superstructure 200 when assembled onto a heavy-duty vehicle 100. In other words, the laterally oriented gantry bar 201, 211 is horizontal in view of the vertical orientation of the superstructure 200. The at least one laterally oriented gantry bar 201, 211 is arranged to extend beyond carried hydrogen fuel tank(s) in the superstructure 200. This means, for example, that the laterally oriented gantry bar 201, 211 may extends from one side 200A of the superstructure 200 that is perpendicular to, or crosswise oriented with respect to, the at least one laterally oriented gantry bar 201, 211 to the other side 200B of the superstructure 200 also perpendicular to, or crosswise oriented with respect to, the at least one laterally oriented gantry bar 201, 211. This may also be referred to herein as the laterally oriented gantry bar 201, 211 extends from one short side 200A of the superstructure 200 to the other short side 200B of the superstructure 200.

The laterally oriented gantry bar 201, 211 may, for example, be made of steel in the form of a pipe or tube. Here, it should be noted that a number of different materials may be used for the laterally oriented gantry bar 201, 211 as long as the result provides a rigid and firm structure that is able to carry the entire weight of the superstructure 200 without being structurally compromised, i.e. bending or breaking. The weight of the superstructure 200 here depends on the amount of equipment that is mounted therein before assembly. Aside from the hydrogen tank(s), the superstructure 200 may also be fitted with additional equipment, such as, e.g. additional hydrogen fuel tank equipment, electrical control system components for the vehicle 100, cooling system components for the vehicle 100, etc. In other words, the laterally oriented gantry bar 201, 211 is required to provide a continuous load bearing structure across the superstructure 200, i.e. from one short side 200A of the superstructure 200 to the other short side 200B of the superstructure 200. As an example, the laterally oriented gantry bar 201, 211 may in some cases be required to be able to carry up to 3500 kg of weight.

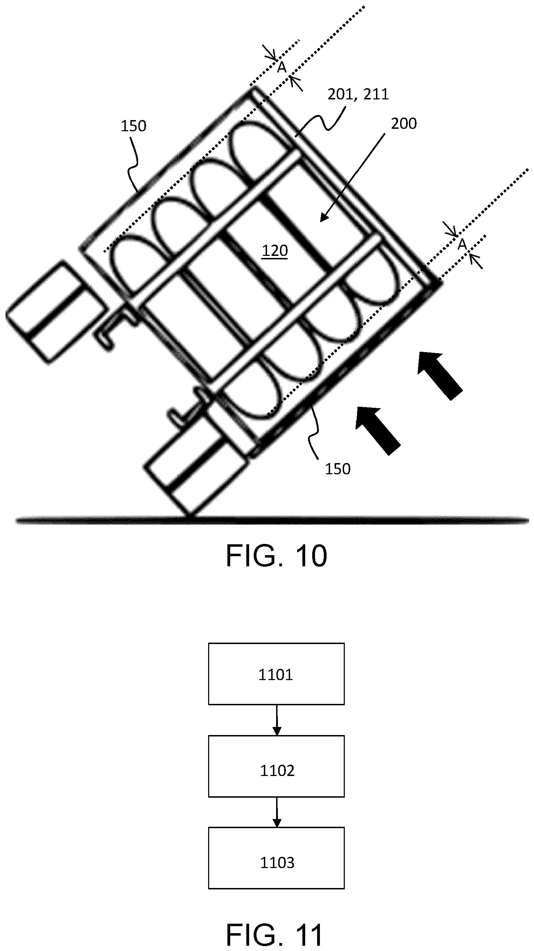

By providing a continuous load bearing structure across the superstructure 200, the laterally oriented gantry bar 201, 211 may be used in order to pick up and lift the superstructure 200. For example, as illustrated in FIG. 2 and later below in FIGS. 11A-E, the laterally oriented gantry bar 201, 211 enables assembly pliers 911, 912 of a gantry tool 901, 902 attached to a gantry lift or crane 900 to enter inside the laterally oriented gantry bar 201, 211 from each of the short sides 200A, 200B of the superstructure 200 and thus be used to pick up and lift the entire superstructure 200.

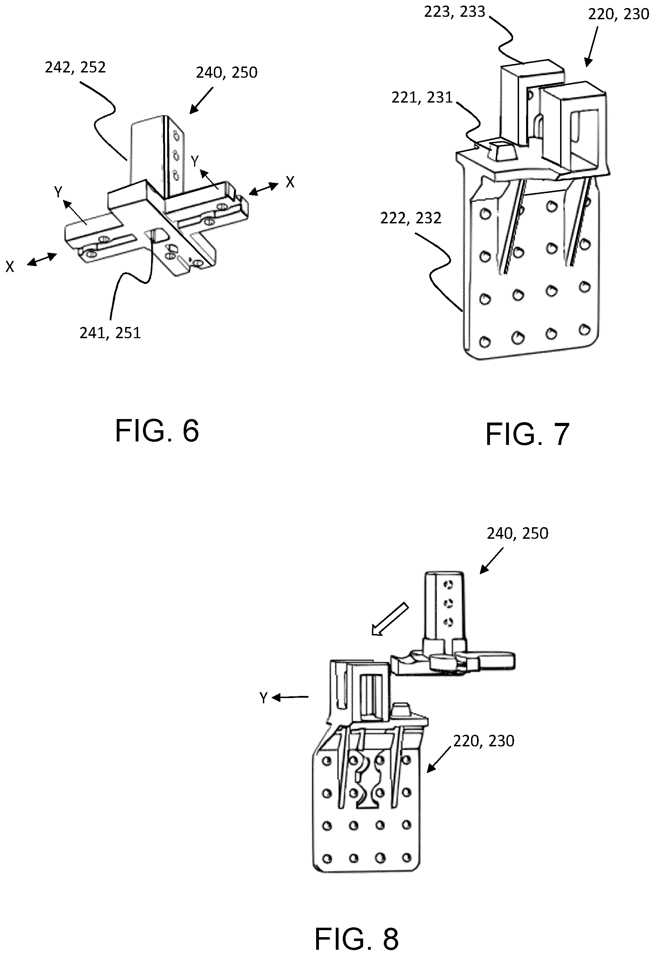

**FIG. 3** illustrates side-views of the schematic examples of the superstructure 200 according to some embodiments shown in FIG. 2. The side-views in FIG. 3 illustrates how a laterally oriented gantry bar, such as, the laterally oriented gantry bar 201, 211 in FIG. 2, that is positioned above the center of gravity of the superstructure 200, or at least above the center of gravity of the superstructure 200 when the superstructure 200 carries hydrogen fuel tank(s) 120 and/or other components, may in a simple way be lifted to from a horizontal, level position (left in FIG. 3) to an vertical, upright position (right in FIG. 3) utilizing the weight distribution of the superstructure 200. This may be advantageous, for example, when a preferred position of the superstructure 200 is horizontal and level while mounting and assembling the hydrogen fuel tank(s) 120 and/or other components onto the superstructure 200. Here, one advantage of using a single laterally oriented gantry bar 201, 211, e.g. a single circular upper beam, is that a single attachment point per short side 200A, 200B may be used for picking up, lifting and moving the superstructure 200 from a horizontal, level position to a vertical, upright position without changing attachment points. Another advantage of using a single laterally oriented gantry bar 201, 211 is that its two attachment points above the center of gravity of the superstructure 200 may be adjusted to provide a preferred drop-angle of the superstructure 200 when assembling the superstructure 200 onto the heavy-duty vehicle 100. This is described in more detail below in reference to FIG. 7A-C.

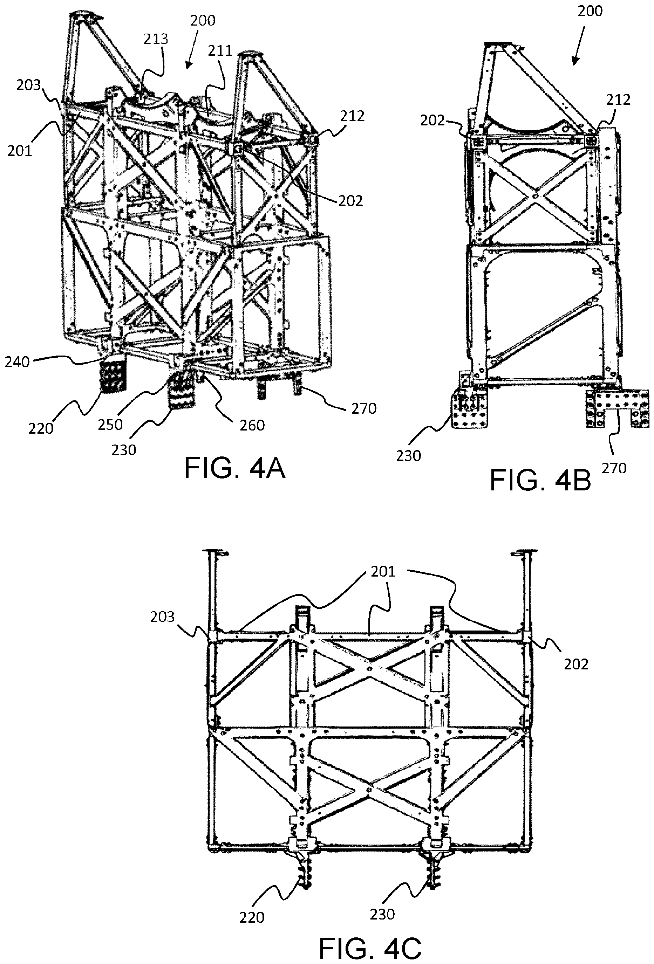

**FIG. 4A** is an illustration showing a perspective view of an example of a superstructure 200 according to some embodiments. The superstructure 200 is arranged to carry hydrogen fuel tank(s) 120 and/or other components and be assembled onto a vehicle frame 110 of a heavy-duty vehicle 100, e.g. behind the driver cabin 140. According to the example in FIG. 4, two laterally oriented gantry bars 201, 211 may be used instead of having a single laterally oriented gantry bar. This may be advantageous in order to create more stability and adjustment possibilities. It should be noted that this may require that a corresponding gantry tool 901, 902 is arranged with dual sets of assembly pliers 911, 912 to enter each of the four attachments points of both of the two laterally oriented gantry bars 201, 211. Even in this case, depending on how the dual sets of assembly pliers 911, 912 of the corresponding gantry tool 901, 902 is controlled, a preferred drop-angle of the superstructure 200 may still be achieved.

The superstructure 200 in FIG. 4A comprise two laterally oriented gantry bars 201, 211. Each of the two laterally oriented gantry bars 201, 211 are at least partly hollow and open-ended on each short side 200A, 200B of the superstructure 200. Thus, the two laterally oriented gantry bars 201, 211 are configured for allowing assembly pliers 911, 912 of the gantry lift 900 to enter the at least one laterally oriented gantry bar 201, 211 in order to lift the superstructure 200. The open-ends of the two laterally oriented gantry bars 201, 211 thus provide for attachments points of the corresponding gantry tool 901, 902 , e.g. the assembly pliers 911, 912. Here, for example, the two laterally oriented gantry bars 201, 211 may, for example, be two steel pipes with a circular or square cross-section (shown in FIG. 4A). In some embodiments, the open-ends of the at least one laterally oriented gantry bar 201, 211 may comprise respective end-pieces 202, 203, 212, 213. The end pieces 202, 203, 212, 213 may advantageously provide additional structural support to the superstructure 200 and facilitate an easy insertion of the lifting tool into the two laterally oriented gantry bars 201, 211, e.g. the assembly pliers 911, 912 of the corresponding gantry tool 901, 902.

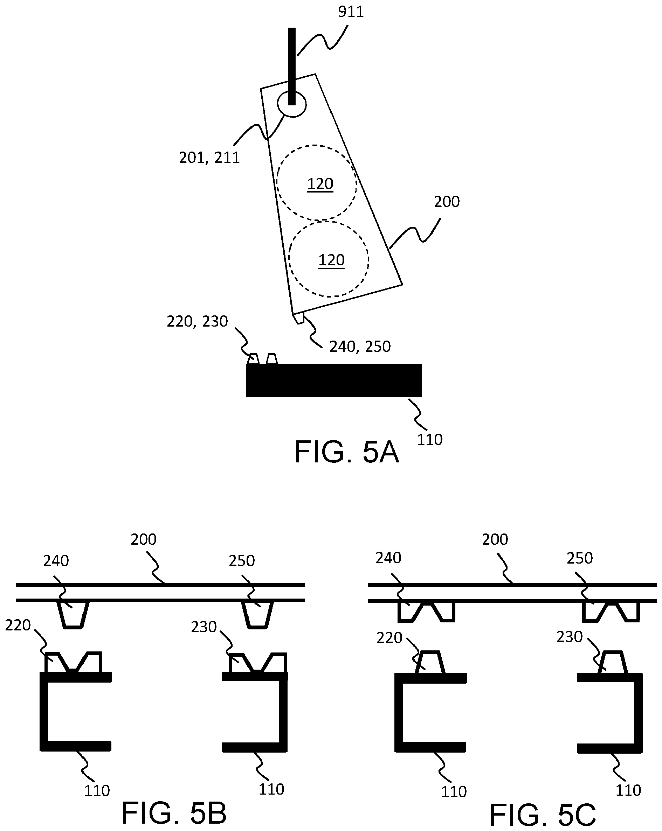

According to some embodiments, the superstructure 200 may be arranged with guidable supports 240, 250 at the bottom of the superstructure 200 engageable with corresponding guidable supports 220, 230 arranged on the heavy-duty vehicle 100. The guidable supports 240, 250 and the corresponding guidable supports 220, 230 are described in more detail below with reference to FIGS. 5-8. In some embodiments, further additional guidable supports 260, 270 may be arranged at the bottom of the superstructure 200 engageable with corresponding guidable supports (not shown) arranged on the heavy-duty vehicle 100. These additional guidable supports 260, 270 may operate in a similar manner as the guidable supports 240, 250.

**FIG. 4B** is an illustration showing a side view of the example of the superstructure 200 according to some embodiments shown in FIG. 4A. Although, shown in Fig. 4A-4B as comprising two main guidable supports 240, 250 at the bottom of the superstructure 200 and two additional guidable supports 260, 270 at the bottom of the superstructure 200, the superstructure 200 may be arranged with any suitable number of guidable supports as described herein. For example, in some embodiments, only one or two main guidable supports 240, 250 may be arranged at the bottom of the superstructure 200. Less number of guidable supports has the advantage of providing a more simpler positioning of the superstructure 200 on the vehicle 100 since less guidable supports has to be matched with its corresponding guidable supports arranged on the vehicle. However, using a higher number of guidable supports has the advantage of providing a more stable positioning of the superstructure 200 on the vehicle 100 since there are more guidable supports that may hold the superstructure 200 on the vehicle 100 in place during assembly.

**FIG. 4C** is an illustration showing a view of the back of an example of the superstructure 200 according to some embodiments shown in FIG. 4A-4B. With the back of the superstructure 200 is here meant the back side of the superstructure 200 arranged to face the driver cabin 140 of the heavy-duty vehicle 100 once assembled onto the vehicle frame 140 of the heavy-duty vehicle 100.

**FIG. 5A-5C** illustrates examples of how guidable supports 240, 250 and corresponding guidable supports 220, 230 may operate when, for example, assembling the superstructure 200 on top of the a vehicle frame 110 of a heavy-duty vehicle 100. Here, it should be noted that depending on which guidable supports 240, 250 and corresponding guidable supports 220, 230 that are used, the superstructure 200 may have different preferred drop-angles in order to engage the guidable supports 240, 250 and corresponding guidable supports 220, 230 with each other.

In FIG. 5A, the superstructure 200 is arranged with guidable supports 240, 250 at the bottom of the superstructure 200 engageable with corresponding guidable supports 220, 230 arranged on the vehicle frame 110 of the heavy-duty vehicle 100. The assembly pliers 911, 912 may lift the superstructure 200 by engaging at least one laterally oriented gantry bar 201, 211, wherein the assembly pliers 911, 912 and/or laterally oriented gantry bar 201, 211 may arranged such that the superstructure 200 is oriented at a specific drop-angle tailored for the guidable supports 240, 250 and corresponding guidable supports 220, 230.

As the superstructure 200 is lowered down towards the vehicle frame 110 of the heavy-duty vehicle 100, the guidable supports 240, 250 are aligned with the corresponding guidable supports 220, 230 arranged on the vehicle frame 110 of the heavy-duty vehicle 100 and then dropped down to have the guidable supports 240, 250 engage with the corresponding guidable supports 220, 230, which will also align the superstructure 200 with its intended position on the vehicle frame 110 on the heavy-duty vehicle 100.

The guidable supports 240, 250 and corresponding guidable supports 220, 230 are arranged to achieve a form locking attachment with each other as the superstructure 200 is assembled onto the vehicle frame 110 of the heavy-duty vehicle 100. This may be achieved in several different ways. However, the basic principle is described with reference to the two examples shown in FIG. 5B-5C, respectively. In FIG. 5B, the superstructure 200 comprise guidable supports 240, 250 that have the shape and form of a cone that e.g. may be circular or square shaped. In this case, the vehicle frame 110 of the heavy-duty vehicle 100 comprise corresponding guidable supports 220, 230 that have the shape and form of a cup that have a complementary shape to the cones of the guidable supports 240, 250. Similarly, in FIG. 5C, the superstructure 200 comprise guidable supports 240, 250 that have the shape and form of a cup that e.g. may be circular or square shaped. In this case, the vehicle frame 110 of the heavy-duty vehicle 100 comprise corresponding guidable supports 220, 230 that have the shape and form of a cone that have a complementary shape to the cups of the guidable supports 240, 250.

**FIG. 6** is an illustration showing a perspective view of an example of a guidable supports 240, 250 according to some embodiments. In this example, the guidable supports 240, 250 is provided with a recess 241, 251 adapted to complement a corresponding protrusion 221, 231, respectively, on the corresponding guidable supports 220, 230 shown in **FIG. 7****.** Here, the guidable supports 240, 250 in FIG. 6 is shown comprising fittings 242, 252 into which the superstructure 200, e.g. the superstructure shown in the example of FIGS. 4A-4C, may be secured and fixedly attached, e.g. through holes for nuts and bolts. Correspondingly, the corresponding guidable supports 220, 230 in FIG. 7 is shown comprising fittings 222, 232 enabling the corresponding guidable supports 220, 230 to be secured and fixedly attached to the vehicle frame 110 of the heavy-duty vehicle 100, re 200, e.g. through holes for nuts and bolts.

Additionally, the guidable supports 240, 250 and the corresponding guidable supports 220, 230 may comprise additional shapes, so as to facilitate a easy assembly of the superstructure 200 onto the vehicle frame 110 of the heavy-duty vehicle 100. For example, the guidable supports 240, 250 may have a cross-shaped form or protrusions, wherein the cross-shape form in one direction X may be used to align the superstructure 200 horizontally across the vehicle frame 110 of the heavy-duty vehicle 100 by being inserted between two wall portions 223, 233 of the corresponding guidable supports 220, 230 as shown in FIGS. 7-8. The cross-shaped form of the guidable supports 240, 250 may also be used to align the superstructure 200 in a forward facing direction X on the vehicle frame 110 of the heavy-duty vehicle 100 by being stopped by the two wall portions 223, 233 of the corresponding guidable supports 220, 230 as shown in FIGS. 7-8.

Furthermore, the guidable supports 240, 250 and the corresponding guidable supports 220, 230 may comprise fittings (not shown) that enables the guidable supports 240, 250 and the corresponding guidable supports 220, 230 to be secured and fixedly attached to each other, e.g. through holes for nuts and bolts.

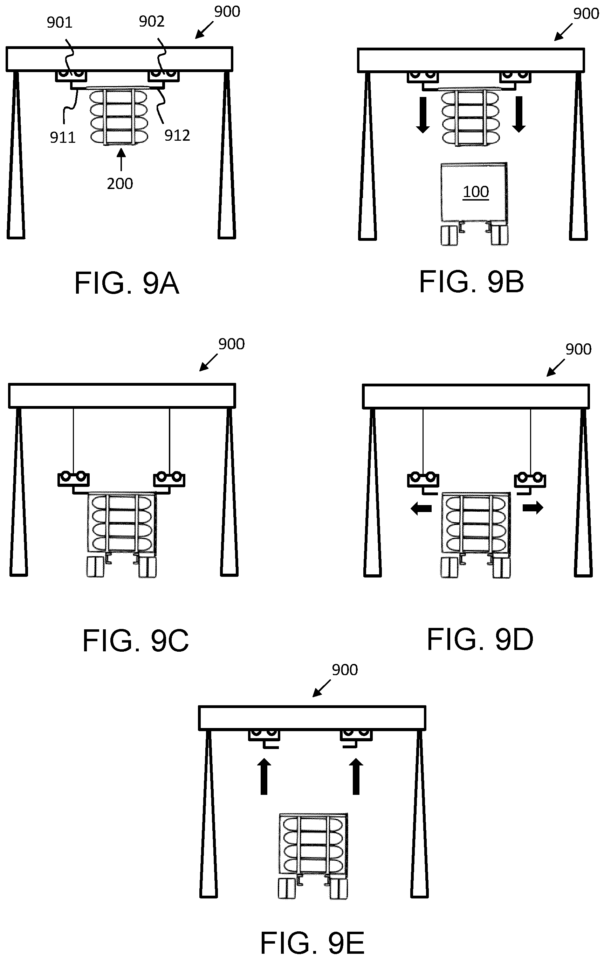

**FIG. 9A-9E** are illustrations showing an example operation of a gantry lift or crane 900 comprising gantry tools 901, 902 having assembly pliers 911, 912 for assembling a superstructure 200 according to embodiments described herein onto a heavy-duty vehicle 100. First, as shown in FIG. 9A, the assembly pliers 911, 912 has been controlled by an operator of the gantry lift or crane 900 to pick up and lift the superstructure 200, for example, via the at least one laterally oriented gantry bar 201, 211 as described above in previous embodiments. As shown in FIG. 9B, a heavy-duty vehicle 100 may then be moved or move underneath the gantry lift or crane 900 and the hoisted superstructure 200. The hoisted superstructure 200 is then lowered down towards the vehicle frame 110 of the heavy-duty vehicle 100. As shown in FIG. 9C, once aligned and resting on the vehicle frame 110 of the heavy-duty vehicle 100, the superstructure 200 may be then be secured and fixedly attached to the vehicle frame 110 of the heavy-duty vehicle 100. As shown in FIG. 9D, the gantry tools 901, 902 and its assembly pliers 911, 912 may then be controlled to leave the at least one laterally oriented gantry bar 201, 211 of the superstructure 200 and then leave the assembly area of the superstructure 200 on the heavy-duty vehicle 100 as shown in FIG. 9E.

**FIG. 10** is a schematic illustration of an rollover accident of a heavy-duty vehicle 100 with a superstructure 200 carrying hydrogen fuel tank(s) according to some embodiments. Here, it should be noted that the at least one laterally oriented gantry bar 201, 211 of the superstructure 200 is arranged to extend beyond the carried hydrogen fuel tank(s) 120 on each short side 200A, 200B of the superstructure 200. This is illustrated by the distance A between the end points of the at least one laterally oriented gantry bar 201, 211 and the short-sides of the hydrogen fuel tank(s) carried by the superstructure 200. This means that the at least one laterally oriented gantry bar 201, 211 of the superstructure 200 will be first to receive any lateral forces (indicated by the arrows in FIG. 12) as the heavy-duty vehicle 100 rolls over and one of its sides hits the ground. Since the at least one laterally oriented gantry bar 201, 211 of the superstructure 200 is constructed to provides a continuous load bearing structure across the superstructure 200, i.e. has a stiff and rigid structure, it may be able to withstand and absorb a larger part of the lateral forces subject to the heavy-duty vehicle 100, at least at the position on vehicle where the superstructure 200 is assembled, and thus protect the hydrogen fuel tank(s) and other components therein from significant impact. Since a preferable position of the superstructure 200 is behind the driver cabin 140 of the heavy-duty vehicle 100, the at least one laterally oriented gantry bar 201, 211 of the superstructure 200 may also protect the driver cabin 140 and a driver located inside the driver cabin 140.

Additionally, it should also be noted that according to some embodiments, each short side 200A, 200B of the superstructure 200 may be arranged to be fitted with air deflector plates 150. This will allow even more of the lateral forces to be absorbed by the superstructure 200 instead of affecting the hydrogen fuel tank(s) and other components carried by the superstructure 200. The air-deflector plates 150 may here, for example, be fitted with one or more skid-plates and may be fixed onto the short sides 200A, 200B of the superstructure 200 in an simple manner, e.g. by a hook-and-hang solution, after the assembly of the superstructure 200 onto the heavy-duty vehicle 100.

Examples of embodiments of a method for assembling a superstructure 200 as described above on a heavy-duty vehicle 100, will now be described with reference to the flowchart depicted in FIG. 11. FIG. 11 is an illustrated example of actions or operations which may be taken by, for example, one or more operators and/or semi- or fully automated machines on an assembly line for assembling a superstructure 200 as described above on a heavy-duty vehicle 100. The method may comprise the following actions.

**Action 1101.** The superstructure 200 is lifted via the at least one laterally oriented gantry bar 201, 211. This may, for example, be performed by using a gantry lift 900 as shown in FIGS. 9A-9E.

**Action 1102.** After being lifted in Action 1101, the superstructure 200 is positioned on the vehicle 100 by engaging at least one guidable support 240, 250 at the bottom of the superstructure 200 with at least one corresponding guidable support 220, 230 arranged on the heavy-duty vehicle 100. This may, for example, be performed as illustrated in FIGS. 5-8.

**Action 1103.** Once the at least one guidable support 240, 250 is form locked with the at least one corresponding guidable support 220, 230, the superstructure 200 is assembled on the heavy-duty vehicle 100. For example, the superstructure 200 may be securely fastened to the vehicle 100 using nuts and bolts. Here, the nuts and bolts may be used to anchor the superstructure 200 with the heavy-duty vehicle 100 during assembly, but may also be used to anchor the at least one guidable support 240, 250 at the bottom of the superstructure 200 with the at least one corresponding guidable support 220, 230 arranged on the heavy-duty vehicle 100.

Example 1: A superstructure (200) for carrying hydrogen fuel tank(s) on a heavy-duty vehicle (100), wherein the superstructure (200) comprises at least one laterally oriented gantry bar (201, 211) providing a continuous load bearing structure across the superstructure (200), wherein the at least one laterally oriented gantry bar (201, 211) are arranged to extend beyond carried hydrogen fuel tank(s) (120) in the superstructure (200).

Example 2: The superstructure (200) according to example 1, wherein the at least one laterally oriented gantry bar (201, 211) is positioned above the center of gravity of the superstructure (200) when the superstructure (200) carries hydrogen fuel tank(s) (120) and/or other components.

Example 3: The superstructure (200) according to example 1 or 2, further comprising at least one guidable support (240, 250) at the bottom of the superstructure (200) engageable with at least one corresponding guidable support (220, 230) arranged on the heavy-duty vehicle (100).

Example 4: The superstructure (200) according to example 3, wherein the at least one guidable support (240, 250) and its corresponding guidable support (220, 230) are arranged to achieve a form locking attachment with each other as the superstructure (200) is mounted onto the heavy-duty vehicle (100).

Example 5: The superstructure (200) according to any of examples 1-4, wherein the at least one guidable support (220) is a bracket comprising a protrusion (221) that is configured to engage a corresponding recess (241) of a bracket of the corresponding guidable support (240), or vice versa.

Example 6: The superstructure (200) according to any of examples 1-5, wherein each end of the at least one laterally oriented gantry bar (201, 211) is arranged to engage with a gantry lift.

Example 7: The superstructure (200) according to example 6, wherein the at least one laterally oriented gantry bar (201, 211) is at least partly hollow and comprise open ends for allowing assembly pliers of the gantry lift to enter the at least one laterally oriented gantry bar (201, 211).

Example 8: The superstructure (200) according to example 7, wherein the open ends of the at least one laterally oriented gantry bar (201, 211) comprise end pieces (202, 203, 212, 213) providing additional structural support to the superstructure (200).

Example 9: The superstructure (200) according to any of examples 1-8, further arranged to carry additional hydrogen fuel tank equipment and/or cooling system components.

Example 10: The superstructure (200) according to any of examples 1-9, wherein the superstructure (200) comprises two or more laterally oriented gantry bars (201, 211).

Example 11: The superstructure (200) according to any of examples 1-10, wherein the superstructure (200) is arranged to be disposed between a driver cabin (101) and a trailer (102) on the heavy-duty vehicle (100).

Example 12: The superstructure (200) according to any of examples 1-11, further arranged to be fitted with air deflector plates (150) on each side (200A, 200B) of the superstructure (200) towards which the ends of the at least one laterally oriented gantry bar (201, 211) are directed.

Example 13: The superstructure (200) according to any of examples 1-12, further arranged to be securely fastened to the vehicle (100) using nuts and bolts.

Example 14: The superstructure (200) according to any of examples 1-13, wherein the guidable supports (240, 250) comprising fittings (242, 252) into which the superstructure (200) may be secured and fixedly attached, and the corresponding guidable supports (220, 230) comprising fittings (222, 232) enabling the corresponding guidable supports (220, 230) to be secured and fixedly attached to the vehicle frame (110) of the heavy-duty vehicle (100).

Example 15: The superstructure (200) according to any of examples 1-14, wherein the guidable supports 240, 250 and the corresponding guidable supports 220, 230 may comprise fittings that enables the guidable supports 240, 250 and the corresponding guidable supports 220, 230 to be secured and fixedly attached to each other.

Example 16: The superstructure (200) according to example 14 or 15, wherein the fittings (242, 252, 222, 232) are through holes for nuts and bolts.

Example 17: A vehicle (100) comprising a superstructure (200) according to any of examples 1-16.

Example 18: The vehicle (100) according to example 17, wherein the vehicle (100) is a vehicle employing hydrogen internal combustion engine or a Fuel Cell Electric Vehicle, FCEV.

Example 19: A method for assembling a superstructure (200) according to any of examples 1-15 on a heavy-duty vehicle (100), comprising lifting (1101) the superstructure (200) via the at least one laterally oriented gantry bar (201, 211); positioning (1102) the superstructure (200) on the vehicle (100) by engaging at least one guidable support (240, 250) at the bottom of the superstructure (200) with at least one corresponding guidable support (220, 230) arranged on the heavy-duty vehicle (100); and once the at least one guidable support (240, 250) is form locked with the at least one corresponding guidable support (220, 230), assembling (1103) the superstructure (200) on the heavy-duty vehicle (100).

Example 20: The method according to example 19, wherein the assembling (1103) comprises securely fastening the superstructure (200) to the vehicle (100) using nuts and bolts.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A superstructure (200) for carrying hydrogen fuel tank(s) on a heavy-duty vehicle (100), wherein the superstructure (200) comprises
at least one laterally oriented gantry bar (201, 211) providing a continuous load bearing structure across the superstructure (200), wherein the at least one laterally oriented gantry bar (201, 211) are arranged to extend beyond carried hydrogen fuel tank(s) (120) in the superstructure (200).

2. The superstructure (200) according to claim 1, wherein the at least one laterally oriented gantry bar (201, 211) is positioned above the center of gravity of the superstructure (200) when the superstructure (200) carries hydrogen fuel tank(s) (120) and/or other components.

3. The superstructure (200) according to claim 1 or 2, further comprising at least one guidable support (240, 250) at the bottom of the superstructure (200) engageable with at least one corresponding guidable support (220, 230) arranged on the heavy-duty vehicle (100).

4. The superstructure (200) according to claim 3, wherein the at least one guidable support (240, 250) and its corresponding guidable support (220, 230) are arranged to achieve a form locking attachment with each other as the superstructure (200) is mounted onto the heavy-duty vehicle (100).

5. The superstructure (200) according to any of claims 1-4, wherein the at least one guidable support (220) is a bracket comprising a protrusion (221) that is configured to engage a corresponding recess (241) of a bracket of the corresponding guidable support (240), or vice versa.

6. The superstructure (200) according to any of claims 1-5, wherein each end of the at least one laterally oriented gantry bar (201, 211) is arranged to engage with a gantry lift.

7. The superstructure (200) according to claim 6, wherein the at least one laterally oriented gantry bar (201, 211) is at least partly hollow and comprise open ends for allowing assembly pliers of the gantry lift to enter the at least one laterally oriented gantry bar (201, 211).

8. The superstructure (200) according to claim 7, wherein the open ends of the at least one laterally oriented gantry bar (201, 211) comprise end pieces (202, 203, 212, 213) providing additional structural support to the superstructure (200).

9. The superstructure (200) according to any of claims 1-8, further arranged to carry additional hydrogen fuel tank equipment and/or cooling system components.

10. The superstructure (200) according to any of claims 1-9, wherein the superstructure comprises two or more laterally oriented gantry bars (201, 211).

11. The superstructure (200) according to any of claims 1-10, wherein the superstructure (200) is arranged to be disposed between a driver cabin (101) and a trailer (102) on the heavy-duty vehicle (100).

12. The superstructure (200) according to any of claims 1-11, further arranged to be fitted with air deflector plates (150) on each side (200A, 200B) of the superstructure (200) towards which the ends of the at least one laterally oriented gantry bar (201, 211) are directed.

13. A vehicle (100) comprising a superstructure (200) according to any of claims 1-12.

14. The vehicle (100) according to claim 13, wherein the vehicle (100) is a vehicle employing hydrogen internal combustion engine or a Fuel Cell Electric Vehicle, FCEV.

15. A method for assembling a superstructure (200) according to any of claims 1-12 on a heavy-duty vehicle (100), comprising
lifting (1101) the superstructure (200) via the at least one laterally oriented gantry bar (201, 211);
positioning (1102) the superstructure (200) on the vehicle (100) by engaging at least one guidable support (240, 250) at the bottom of the superstructure (200) with at least one corresponding guidable support (220, 230) arranged on the heavy-duty vehicle (100); and
once the at least one guidable support (240, 250) is form locked with the at least one corresponding guidable support (220, 230),
assembling (1103) the superstructure (200) on the heavy-duty vehicle (100).
